# EUROPEAN PATENT SPECIFICATION

(11) **EP 0 955 612 B1**
(45) Date of publication and mention of the grant of the patent: **02.07.2003**
(21) Application number: 98630018.4
(22) Date of filing: 08.05.1998
(51) Int. Cl.: G07F 7/08, B67D 5/33, G07F 7/10

(54) **Electronic automatic system and method for recording fuel expenses so as to be usable as a fiscal document**
Elektronisches, automatisches System und Verfahren zur Benzinkostenaufzeichnung, um sie als fiskalisches Dokument zu verwenden
Système automatique électronique et méthode pour l'enregistrement des frais de carburant afin de l'utiliser comme document fiscal

(43) Date of publication of application: 10.11.1999
(73) Proprietor: Consaldi SrL, 00186 Rome (IT)
(72) Inventor: Peri, Gianni, 00186 Roma (IT)
(74) Representative: Waxweiler, Jean

(56) References cited:
- WO-A-97/35284
- CA-C- 2 083 018
- FR-A- 2 473 755
- FR-A- 2 750 521
- US-A- 5 557 529
- US-A- 5 579 233

## Description

The invention relates to the field of fuel purchases for transportation and provides secure proof of the overall fuel consumption related to the work activity of transportation companies and professionals. Fuel consumption expenses may be deducted from the yearly tax declaration, fully or in part, in accordance to the tax laws of the pertinent country. Additionally, the system provides ways apt to the recovery of the VAT charges and allows automatic reductions of the fuel posted price in accordance with specific national or regional tax benefit fiscal rules.

Each country, including those of the European Community, has the problem to endorse companies and single professionals with the expenses incurred in the transportation costs when they relate to work activities and not to leisure. This simple concept is very difficult to implement, in practical terms, owing to the innumerable amount of different fiscal subjects, contrasting VAT regulations and various payment methods.

Each country has faced this problem in a different way, but always based on theoretical assumptions and has developed reporting methods which are very approximate, giving way to incorrect tax collection and a very high level of tax fraud. Therefore tax collection is inadequate, incomplete and, at the same time, inequitable.

US-A-5 579 233 discloses a method for ensuring the delivery of the proper petroleum or similar product, and the accurate recording of the delivery, from a plurality of petroleum and similar products carried on a tank truck, into customer vehicle fuel tanks and later verifying compliance with this method of delivery.

The method should make sure that the tank truck driver delivers the volume ordered with a supplier by a client for a given site into the correct tank or container, while respecting tax and environment legislation and also enabling billing to the client. The driver receives from the supplier a client list enabling him to drive to the clients the products ordered and loaded on his truck; said list being also stored in the memory of a hand held probe with all details required to enable the sure delivery described hereinbefore. These details relate to the client, his site, his tanks, the products ordered and the hoses on the tank truck from which the products flow. Only if all this has been checked at the client's site, a product can be delivered. Thereafter all details relating to this delivery are transferred from the probe to an onboard computer for later transfer to the office computer of the supplier.

The object of the invention is to provide a system and method allowing correct endorsement of expenses incurred in transportation cost, correct tax collection and elimination of fraud, all to a very high degree of security.

According to the invention, these problems are resolved by means of the system and method of the independent claims. Embodiments of the invention are claimed in the dependent claims.

The system and method allow the automated electronic registration of the fuel expenses at the time they are incurred and are capable to register each single payment by fully identifying the driver making the payment and the connected authorized vehicle. The system and method can accommodate any type of payment, extending from the manual payments to the fully automated ones.

The advantages of the system of the invention are manifold. First, to the government authorities, the full elimination of frauds, the added flexibility to treat diversified fiscal subjects and the full certainty that the expense deductions claimed are in accordance with current regulations. Second, to the individual claimer the assurance of equal treatment and the certainty that all expenses incurred may be registered, no matter the form of payment used. And third, to the oil industry and the associated dealers the advantage to exploit an electronic automated system that, when installed, might be used for other commercial and marketing purposes. Other advantages may become apparent from the description of the invention which follows, which may be used in other fields in which an identical or similar problem exists and should not be considered limited to the use in connection with fuel purchase for transportation purposes, tax declaration of transportation cost and VAT recovery.

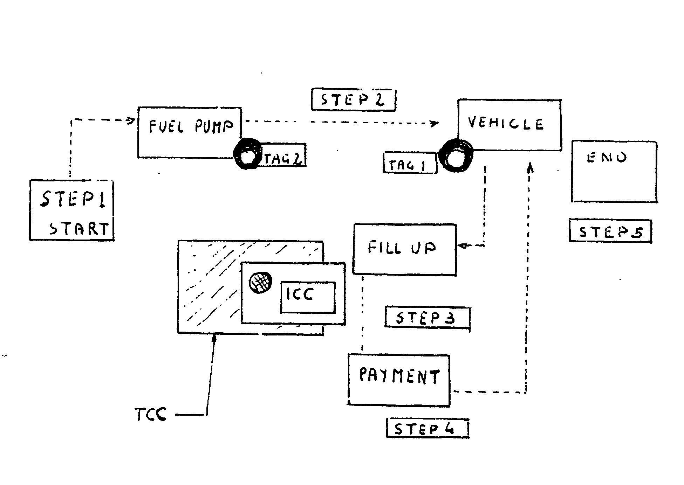

The invention will now be described by way of example with reference to the accompanying drawing showing in block form the operation of the system according to the invention.

The system includes an Intelligent Fuel Customer Chip Card (ICC), with a high level of security, issued to each individual authorized vehicle and connected driver. The system further includes a chip card of the same type issued to each individual fuel station dealer (IDC); in its memory means the identification of the fuel dealer and fuel station are memorized. The core of the system is a movable Customer Fuel Card Terminal (TCC) associated with each single authorized driver, the function of which will be described later. Finally, a series of small identification elements (TAG) of simple installation and very high reliability are provided to be integrated in the context of the overall system as described below. The payment for the fill ups is performed in the usual ways with an important variant: the collection, verification and registration of the purchase are performed at the same time of the physical filling.

The authorized car or vehicle is equipped with a passive identification element (TAG1), made solid with the vehicle, capable to uniquely identify this vehicle and to register the i.d. code thereof via the customer fuel card terminal (TCC) into the ICC card inserted therein.

A second passive identification element (TAG2), solidly attached to the fuel pump, identifies the fuel pump island and the fuel station and is capable of registering the i.d. code and other relevant station information thereof into the ICC card, inserted into the customer fuel card terminal (TCC).

Payment may take the form of any of the current payment methods, like cash payments credit cards, bank cards, company cards, fidelity cards, etc. For those stations equipped with automatic card acceptors, allowing unmanned self service, the automated acceptor is equipped with a device capable to recognize the driver and the connected authorized vehicle and to transfer the fill up information into the ICC card together with identification data of the fuel station and dealer.

The fundamental element of the system for the data collection and storage is the ICC chip card, i.e. the Customer Card, carried by each single driver, and the IDC chip card, i.e. the Dealer Card, carried by each single fuel dealer. The fundamental control of each transaction is performed by the Intelligent Customer Card Fuel Terminal (TCC), in adoption to each authorized customer/vehicle and equipped with a high level security module.. The terminal (TTC) is capable to identify the authorized vehicle by receiving information from the vehicle identification element (TAG1), the station equipment by receiving information from the identification element (TAG2) of the fuel station, to verify the station and dealer information by matching them with the data incorporated inside the dealer card (IDC) and to record the data pertaining to the fuel transaction into the customer card (ICC).

The system according to the invention operates as follows:
Step 1): Recognition by the terminal (TCC) of the station pump island and dealer via its identification element (TAG2);
Step 2): Recognition by the terminal (TCC) of the driver by reading its customer card (ICC), the authorized vehicle via its identification element (TAG1) and verification of their validity and compatibility;
Step 3): Fill up operation.

Before filing, the fuel station and dealer information, previously inserted into the movable fuel card terminal (TCC), by means of the TAG2, are verified by the insertion of the dealer card (IDC) into the movable fuel card terminal (TCC). After confirmation of the fuel station and dealer information previously entered via the identified element (TAG2) of the station pump island with that read from the dealer card (IDC) the fill up operation may be stared and completed.
Step 4): Payment and payment registration.

The recording of the payment into the customer card (ICC) is performed through different procedures according to the payment method used.

In case of any form of cash payment, the dealer will enter into the movable fuel card terminal (TCC), containing the customer card, the payment information by hand.

In case of payment by the usage of a POS terminal, different procedures will take place according to the level of system integration between the pumps and the POS terminal. In any case, the payment transaction is recorded into the customer card (ICC) and matched with the fill up data previously recorded.

In case of money and card acceptors of any type, which are connected directly to the pumps so to unable unmanned fill ups (self service), fuel station, dealer and payment information are recorded into the customer card (ICC) directly by the acceptor, when the customer card (ICC) is introduced into the acceptor by the customer, before performing the fill up. In this particular case the fill up can only start after the card and money acceptor has verified after the insertion of the customer card (ICC), the fuel station and dealer information written onto the customer card by the card terminal (TCC) during step 1 matches with that installed in the acceptor. Only upon establishment of this match the fuel fill up can be stared and completed.
Step 5): End of transaction

By approaching the movable fuel card terminal (TCC) to the car, the customer verifies via the identification element (TAG1) thereof that the car is the same that has initiated the transaction and that the allowable time between start and end of the transaction has not expired. By giving the movable fuel card terminal (TCC) the command of "end of transaction", the customer validates the payment and all data related to the entire translation into the customer card (ICC).

Each single step is authorized only when the preceding step has been correctly executed. Operations not fully completed or aborted due to various causes are recorded with a specific code for identification.

The use of the customer card (ICC) as a hand carried personal register of the various phases of the purchase, including the payment, and as a cumulative file of all operations effected in the time period of the card validity, guaranties the true correspondence between the individual driver an the correlated authorized vehicle, the odometer reading, the payment amount, the location and timing of the purchase.

A system as the one described above offers the possibility to include, in the customer card (ICC) the features related to the electronic fund transfer, as a payment method, and to purchase recognition, as a marketing tool providing points for volume purchase.

A system as the one described may be in addition include the feature for physical identification of the driver, e.g. by means of biometric technology or other methods.

## Claims

1. An electronic automated system for recording of fuel expenses so as to be usable as a fiscal document, **characterized by** an Intelligent Fuel Customer Chip Card (ICC) intended for use by a car driver adapted to identify the car driver and the car he is authorized to drive,
an Intelligent Fuel Station Dealer Chip Card (IDC) intended to identify a fuel station dealer,
an identification element (TAG1) intended to identify a car and fixedly mounted to said car,
an identification element (TAG2) intended to identify a fuel pump of the fuel station of the fuel station dealer and fixedly mounted to said fuel pump, and
a movable or hand carried customer fuel card terminal (TCC) adapted so as to enable before the filling of fuel into a car to identify the car via its identification element (TAG1), the pump via its identification element (TAG2), the driver by reading the Intelligent Fuel Customer Chip Card (ICC), the fuel station dealer by reading the Intelligent Fuel Station Dealer Chip Card (IDC) and to receive information on the payment of the purchased fuel and to write the pertinent data related to the filling operation into the Intelligent Fuel Customer Chip Card whereby it becomes usable as a fiscal document.

2. The electronic automated system according to claim 1, comprising a POS terminal at the fuel station adapted to receive and read from the Intelligent Fuel Customer Chip Card (ICC) the pertinent data related to the fuel filling operation to use them for the payment transaction and to write into the Intelligent Fuel Customer Chip Card (ICC) the payment data.

3. The electronic automated system according to claim 1, comprising a card acceptor adapted for unmanned self-service, said card acceptor being further adopted to receive and read the Intelligent Fuel Customer Chip Card (ICC) to compare pump and dealer identification written on the card by the customer card terminal (TCC) with pump and dealer identification stored in the card acceptor, and to write into it the pertinent data of the fuel filling including at least the fuel dealer identification, the amount of fuel filled and the payment made.

4. The electronic automated system according to any of the claims 1 to 3, including means for physical identification of the driver using, e.g., biometric technology.

5. A method for electronic automated recording of fuel expenses so as to produce a record thereof usable as a fiscal document, **characterized by**:
using an Intelligent Fuel Customer Chip Card (ICC) intended for use by a car driver adapted to identify the car driver and the car he is authorized to drive,
using an Intelligent Fuel Station Dealer Chip Card (IDC) intended to identify a fuel station dealer,
using an identification element (TAG1) intended to identify a car and fixedly mounted to said car,
using an identification element (TAG2) intended to identify a fuel pump of the fuel station of the fuel station dealer and fixedly mounted to said fuel pump, and
using before the filling of fuel into a car a movable or hand carried customer fuel card terminal (TCC) to identify the car via its identification element (TAG1), the station pump and dealer via its identification element (TAG2), the driver by reading the Intelligent Fuel Customer Chip Card (ICC), and the fuel station dealer by reading the Intelligent Fuel Station Dealer Chip Card (IDC) to store the station pump and dealer identification on the Intelligent Fuel Customer Chip Card (ICC) to start fill up when the fuel station dealer identifications by the identification element (TAG2) and the Intelligent Fuel Station Dealer Chip Card (IDC) match, and
using the customer fuel card terminal (TCC) after termination of the fuel fill up to receive information on the payment of the purchased fuel to write the pertinent data related to the filling operation into the Intelligent Fuel Customer Chip Card (ICC) whereby it becomes usable as a fiscal document.

6. The method according to claim 5, comprising using a POS terminal at the fuel station to receive and to read from the Intelligent Fuel Customer Chip Card (ICC) the pertinent data related to the fuel filling operation, to use them for the payment transaction and to write into the Intelligent Fuel Customer Chip Card (ICC) the payment data related thereto.

7. The method according to claim 1, comprising using a card acceptor adapted for unmanned self-service having the pump station and dealer identification stored therein and adapted to receive and read the Intelligent Fuel Customer Chip Card (ICC) to establish a match between the stored pump and dealer identification and that read from the Intelligent Fuel Customer Chip Card (ICC) to enable start of the fill up operation and to write after termination of the fill up operation into the Intelligent Fuel Customer Chip Card (ICC) the pertinent data of the fuel filling including at least the fuel station and dealer identification, the amount of fuel filled and the payment made.

8. The method according to any of the claims 1 to 3, including the feature of physical identification of the driver using, e.g., biometric technology.

## Patentansprüche

1. Elektronisches, automatisches System zur Benzinkostenaufzeichnung, um sie als fiskalisches Dokument zu verwenden, **gekennzeichnet durch**
eine Chipkarte für den Benzinverbraucher (Intelligent Benzinverbraucher-Chipkarte - ICC), die von einem Fahrzeugführer benutzt werden soll, um den Fahrzeugführer und das Fahrzeug, das der Fahrzeugführer fahren darf, zu identifizieren;
eine Chipkarte für den Tankstelleninhaber (Intelligent Fuel Station Dealer Chip Card - IDC), die einen Tankstelleninhaber identifizieren soll;
ein Identifikationselement (TAG1), das ein Fahrzeug identifiziert und fest mit dem Fahrzeug verbunden ist;
ein Identifikationselement (TAG2), das eine Zapfsäule der Tankstelle des Tankstelleninhabers identifiziert und fest mit der Zapfsäule verbunden ist und
ein bewegliches oder tragbares Benzinverbraucher-Kartenterminal (TCC), das es ermöglicht, vor dem Tankvorgang das Fahrzeug über das Identifikationselement (TAG1), die Zapfsäule über das Identifikationselement (TAG2), den Fahrer über das Auslesen der Benzinverbraucher-Chipkarte (ICC) und den Tankstelleninhaber über das Auslesen der Tankstelleninhaber-Chipkarte (IDC) zu identifizieren und Informationen über die Bezahlung des erhaltenen Benzins zu empfangen und die einschlägigen Daten über den Tankvorgang auf die Benzinverbraucher-Chipkarte zu schreiben, wodurch sie als fiskalisches Dokument nutzbar wird.

2. Elektronisches, automatisches System nach Anspruch 1, umfassend ein POS-Terminal an der Tankstelle, das die einschlägigen Daten des Tankvorgangs von der Benzinsverbraucher-Chipkarte (ICC) empfangen bzw. auslesen kann und diese Daten für die Bezahlung nutzt sowie die Daten über die Bezahlung auf die Benzinverbraucher-Chipkarte (ICC) schreibt.

3. Elektronisches, automatisches System nach Anspruch 1, umfassend ein Kartenlesegerät für die Selbstbedienung ohne Bedienpersonal, wobei das Kartenlesegerät die Benzinverbraucher-Chipkarte (ICC) ausliest, um die Zapfsäulen- und Tankstelleninhaber-Identifikation, welche durch das Verbraucher-Kartenterminal (TCC) auf die Karte geschrieben wurde, mit der Zapfsäulen- und Tankstelleninhaber-Identifikation, welche im Kartenlesegerät gespeichert ist, zu vergleichen und um auf sie die einschlägigen Daten über den Tankvorgang, umfassend mindestens die Tankstelleninhaber-Identifikation, die Menge an getanktem Benzin und die Bezahlung, zu schreiben.

4. Elektronisches, automatisches System nach einem der Ansprüche 1 bis 3, umfassend Einrichtungen zur physikalischen Identifikation des Fahrers, beispielsweise biometrische Technologie.

5. Verfahren zur elektronisch automatisierten Aufzeichnung des Benzinverbrauchs, um eine Benzinkostenaufzeichnung zu erstellen, die als fiskalisches Dokument nutzbar ist, **gekennzeichnet durch**:
Nutzung einer Chipkarte für den Benzinverbraucher (Intelligent Benzinverbraucher-Chipkarte - ICC), die von einem Fahrzeugführer benutzt werden soll, um den Fahrzeugführer und das Fahrzeug, das der Fahrzeugführer fahren darf, zu identifizieren;
Nutzung einer Chipkarte für den Tankstelleninhaber (Intelligent Fuel Station Dealer Chip Card - IDC), die einen Tankstelleninhaber identifizieren soll;
Nutzung eines Identifikationselements (TAG1), das ein Fahrzeug identifiziert und fest mit dem Fahrzeug verbunden ist;
Nutzung eines Identifikationselements (TAG2), das eine Zapfsäule der Tankstelle des Tankstelleninhabers identifiziert und fest mit der Zapfsäule verbunden ist und
Nutzung eines beweglichen oder tragbaren Benzinverbraucher-Kartenterminals (TCC), um vor dem Tankvorgang das Fahrzeug über das Identifikationselement (TAG1), die Zapfsäule über das Identifikationselement (TAG2), den Fahrer über das Auslesen der Benzinverbraucher-Chipkarte (ICC) und den Tankstelleninhaber über das Auslesen der Tankstelleninhaber-Chipkarte (IDC) zu identifizieren, um die Zapfsäulen- und Tankstelleninhaber-Identifikation auf der Benzinverbraucher-Chipkarte (ICC) zu speichern, um den Tankvorgang zu starten, wenn die Tankstelleninhaber-Identifikationen vom Identifikationselement (TAG2) und der Tankstelleninhaber-Chipkarte (IDC) übereinstimmen, und
Nutzung des Benzinverbraucher-Kartenterminals (TCC) nach Beendigung des Tankvorgangs, um Informationen über die Bezahlung des erhaltenen Benzins zu empfangen und die einschlägigen Daten über den Tankvorgang auf die Benzinverbraucher-Chipkarte (ICC) zu schreiben, wodurch sie als fiskalisches Dokument nutzbar wird.

6. Verfahren nach Anspruch 5, umfassend die Nutzung eines POS-Terminals an der Tankstelle, um die einschlägigen Daten des Tankvorgangs von der Benzinverbraucher-Chipkarte (ICC) zu empfangen bzw. auszulesen, diese Daten für die Bezahlung zu nutzen und die dazugehörigen Daten über die Bezahlung auf die Benzinverbraucher-Chipkarte (ICC) zu schreiben.

7. Verfahren nach Anspruch 5, umfassend die Nutzung eines Kartenlesegerätes für die Selbstbedienung ohne Bedienpersonal, das die Zapfsäulen- und Tankstelleninhaber-Identifikation gespeichert hat und die Benzinverbraucher-Chipkarte (ICC) auslesen kann, um die Übereinstimmung zwischen der gespeicherten Zapfsäulen- und Tankstelleninhaber-Identifikation festzustellen und das die Benzinverbraucher-Chipkarte (ICC) ausliest, um den Beginn des Tankvorgangs zu ermöglichen und um nach Beendigung des Tankvorgangs die einschlägigen Daten über den Tankvorgang, umfassend mindestens die Zapfsäulen- und Tankstelleninhaber-Identifikation, die Menge an getanktem Benzin und die Bezahlung, auf die Benzinverbraucher-Chipkarte (ICC) zu schreiben.

8. Verfahren nach einem der Ansprüche 5 bis 7, umfassend das Merkmal einer physikalischen Identifikation des Fahrers, beispielsweise durch Nutzung biometrischer Technologie.

## Revendications

1. Système automatisé électronique permettant d'enregistrer des dépenses de carburant de façon à pouvoir utiliser l'enregistrement comme un document fiscal, **caractérisé en ce qu'**il comporte une carte à puce intelligente du consommateur de carburant (ICC) apte à être utilisée par le conducteur d'une voiture et adaptée à l'identification du conducteur et du véhicule qu'il est autorisé à conduire,
- une carte à puce intelligente du distributeur de la station service (IDC) apte à identifier le distributeur d'une station service,
- un élément d'identification (TAG1) apte à identifier un véhicule et à être monté de manière fixe sur ledit véhicule,
- un élément d'identification (TAG2) apte à identifier une pompe à carburant de la station service du distributeur de carburant et à être monté de manière fixe à ladite pompe à carburant, et
- un terminal de carte mobile ou portable du consommateur de carburant (TCC), apte à permettre, avant le remplissage en carburant du véhicule, l'identification de ce dernier par son élément d'identification (TAG1),l'identification de la pompe par son élément d'identification (TAG2), l'identification du conducteur par la lecture de la carte à puce intelligente du consommateur de carburant (ICC), l'identification du distributeur de la station service par la lecture de la carte à puce intelligente du distributeur de la station service (IDC), et conçu pour recevoir des informations relatives au paiement du carburant acheté et pour écrire les données pertinentes concernant l'opération de remplissage en carburant dans la carte à puce intelligente du consommateur de carburant, ce par quoi l'enregistrement est utilisable comme document fiscal.

2. Système automatisé électronique selon la revendication 1, comprenant un terminal POS au niveau de la station service apte à recevoir et lire depuis la carte à puce intelligente du consommateur de carburant (ICC) les données pertinentes relatives à l'opération de plein de carburant afin de les utiliser pour la transaction de paiement, et pour écrire les données de paiement dans la carte à puce intelligente du consommateur de carburant (ICC).

3. Système automatisé électronique selon la revendication 1, comprenant un accepteur de carte adapté à un libre service sans personnel, ledit accepteur de carte étant en outre apte à recevoir et lire la carte à puce intelligente du consommateur de carburant (ICC) afin de comparer les données d'identification du distributeur et de la pompe écrites sur la carte par le terminal de carte du consommateur (TCC) avec les données d'identification du distributeur et de la pompe stockées dans l'accepteur de carte, et afin d'écrire dans celle-ci les données pertinentes concernant le plein de carburant et comprenant au moins l'identification du distributeur de carburant, la quantité d'essence achetée et le paiement réalisé.

4. Système automatisé électronique selon l'une quelconque des revendications 1 à 3, comprenant un dispositif d'identification physique du conducteur à l'aide, par exemple, de la technologie biométrique.

5. Procédé permettant l'enregistrement automatisé électronique des dépenses de carburant de façon à produire un enregistrement de ces dernières utilisable comme un document fiscal, **caractérisé par** :
- l'utilisation d'une carte à puce intelligente du consommateur de carburant (ICC) apte à être utilisée par le conducteur d'un véhicule et adaptée à l'identification du conducteur et du véhicule qu'il peut conduire,
- l'utilisation d'une carte à puce intelligente du distributeur de la station service (IDC) conçue pour identifier le distributeur d'une station service,
- l'utilisation d'un élément d'identification (TAG1) conçu pour identifier un véhicule et pour être monté de manière fixe au dit véhicule,
- l'utilisation d'un élément d'identification (TAG2) conçu pour identifier une pompe à carburant de la station service du distributeur de carburant et pour être monté de manière fixe à ladite pompe à carburant, et
- l'utilisation d'un terminal de carte mobile ou portable du consommateur de carburant (TCC) conçu pour permettre, avant le remplissage en carburant du véhicule, l'identification de ce dernier grâce à son élément d'identification (TAG1), l'identification de la pompe à carburant grâce à son élément d'identification (TAG2), l'identification du conducteur grâce à la lecture de la carte à puce intelligente du consommateur de carburant (ICC), et l'identification du distributeur de la station service grâce à la lecture de la carte à puce intelligente du distributeur de la station service (IDC) afin de stocker les données d'identification de la pompe à carburnant et du distributeur de la station service sur la carte à puce intelligente du consommateur de carburant (ICC) pour démarrer le remplissage en carburant lorsque les identifications du distributeur de la station service par l'élément d'identification (TAG2) et par la carte à puce intelligente du distributeur de la station service (IDC) correspondent, et
- l'utilisation du terminal de carte du consommateur (TCC) à la fin du remplissage en carburant pour recevoir des informations relatives au paiement du carburant acheté afin d'écrire les données pertinentes liées à l'opération de remplissage en carburant dans la carte à puce intelligente du consommateur de carburant (ICC), ce par quoi cet enregistrement devient utilisable comme document fiscal.

6. Procédé selon la revendication 5, comprenant l'utilisation d'un terminal POS au niveau de la station service apte à recevoir et lire depuis la carte à puce intelligente du consommateur de carburant (ICC) les données pertinentes relatives à l'opération de remplissage en carburant afin de les utiliser pour la transaction de paiement, et pour écrire les données de paiement dans la carte à puce intelligente du consommateur de carburant (ICC).

7. Procédé selon la revendication 1, comprenant l'utilisation d'un accepteur de carte adapté à un libre-service sans personnel possédant un enregistrement des données d'identification de la station service et du distributeur, et apte à recevoir et lire la carte à puce intelligente du consommateur de carburant (ICC) afin d'établir une correspondance entre les données d'identification de la pompe et du distributeur stockées et celles lues depuis la carte à puce intelligente du consommateur de carburant (ICC) afin d'autoriser le début de l'opération de remplissage en carburant et d'écrire à la fin de cette opération dans la carte à puce intelligente du consommateur de carburant (ICC) les données pertinentes concernant le remplissage en carburant, comprenant au moins l'identification de la station service et du distributeur, la quantité de carburant achetée et le paiement réalisé.

8. Procédé selon l'une quelconque des revendications 1 à 3, comprenant comme caractéristique l'identification physique du conducteur à l'aide, par exemple, de la technologie biométrique.
